# EUROPÄISCHE PATENTSCHRIFT

(11) **EP 1 647 755 B1**
(45) Veröffentlichungstag und Bekanntmachung des Hinweises auf die Patenterteilung: **29.10.2008**
(21) Anmeldenummer: 05021454.3
(22) Anmeldetag: 30.09.2005
(51) Int. Cl.: F16L 23/08

(54) **Profilschelle**
Profile clamp
Collier à profil

(30) Priorität: 15.10.2004 DE 102004050300
(43) Veröffentlichungstag der Anmeldung: 19.04.2006
(73) Patentinhaber: NORMA Germany GmbH, 63277 Maintal (DE)
(72) Erfinder: Hartig, Günther, Lambourn, Berkshire RG17 8YP (GB); Williams, Steve, Witney, Oxon OX29 8QP (GB)
(74) Vertreter: Knoblauch, Andreas

(56) Entgegenhaltungen:
- DE-B- 1 135 249
- US-A- 5 301 986

## Beschreibung

Die Erfindung betrifft eine Profilschelle mit durch wenigstens einen Spannverschluß spannbaren, sich hintereinander in Umfangsrichtung der Schelle erstreckenden Profilsegmenten, die ein einem umgekehrten Trog im Querschnitt ähnelndes Profil aufweisen und zwischen deren divergierenden Seitenwänden an den Enden zweier durch die Schelle zu verbindender Rohre vorgesehene Flansche mit gleichem Durchmesser beim Spannen der Schelle zueinander hin gedrückt werden, wobei zwischen einander benachbarten Profilsegmenten jeweils einen Boden aufweisende Lücken vorgesehen sind.

Eine derartige Profilschelle ist aus US 5 301 986 A bekannt. Die Profilsegmente sind durch Klammern an einem Spannband gehalten, wobei die Klammern das Spannband von außen lose umgreifen, so daß sich die Profilsegmente und das Spannband in Umfangsrichtung relativ zueinander bewegen können.

Bei der Anwendung von Profilschellen dieser Art, die beispielsweise aus dem Prospekt NORMA^{®} Schellen, Mai 1980, Seite 1 der Anmelderin oder der deutschen Patentschrift DE 198 18 562 C1 bekannt sind, tritt gelegentlich der Fall auf, daß die zu verbindenden Rohre vor dem Herumlegen der Profilschelle um die Flansche der Rohre radial relativ zueinander etwas versetzt sind und die Schräge der Seitenwände der Profilsegmente nicht ausreicht, die Flansche und damit auch die Rohre im Bereich der Schelle zu zentrieren.

Der Erfindung liegt die Aufgabe zugrunde, eine Profilschelle der eingangs geschilderten Art anzugeben, bei der sich selbsttätig eine Zentrierung anfänglich exzentrischer Flansche ergibt.

Erfindungsgemäß ist diese Aufgabe dadurch gelöst, daß sich in jeder Lücke ein federnder Metallstreifen in einem Abstand vom Boden der Lücke, der größer als die Dicke des Bodens der Profilsegmente ist, quer zur Schellenebene erstreckt und über seitliche Arme des Metallstreifens am Boden der Lücke angebracht ist.

Bei dieser Lösung stoßen anfänglich exzentrische Flansche beim Spannen der Profilschelle mit ihrem Umfang an jeweils wenigstens einen der Metallstreifen. Dadurch werden die Flansche bei weiterem Spannen der Profilschelle schließlich in eine koaxiale, zentrale Lage verschoben. Wenn die Flansche zentriert sind, aber noch nicht dicht aneinander oder an einem zwischen ihnen angeordneten Dichtring anliegen, können sich die Metallstreifen zum Boden der sie aufnehmenden Lücke hin elastisch durchbiegen, bis die Flansche dicht aneinander oder an einem zwischen ihnen angeordneten Dichtring anliegen.

Vorzugsweise ist dafür gesorgt, daß die Arme jeweils zu einem der Ränder des Bodens der betreffenden Lücke hin divergieren und den jeweiligen Rand lose umgreifen. Hierbei können sich die Arme ebenfalls beim Spannen der Profilschelle unter dem Druck der Flansche durchbiegen und aufspreizen, wenn die Durchbiegung der Streifen alleine nicht ausreicht, um die zentrierten Flansche dicht aneinander oder an einen zwischen ihnen angeordneten Dichtring zu drücken.

Zweckmäßigerweise ist der erwähnte Abstand im ungespannten Zustand der Schelle größer als das Zweifache der Dicke des Bodens der Profilsegmente und kleiner als die radiale Länge der Seitenwände der Profilsegmente. Dieser Abstand ermöglicht eine hinreichende Durchbiegung des Metallstreifens und gegebenenfalls seiner Arme bis zur dichten Anlage der Flansche aneinander oder an einem zwischen ihnen angeordneten Dichtring.

Die Lücken sind vorzugsweise in weitgehend gleichen Winkelabständen vorgesehen, wobei wenigstens drei Lükken vorgesehen sein können. Dementsprechend können auch bei einer geringen Anzahl von beispielsweise nur drei Lücken und Metallstreifen letztere einen weitgehend gleichmäßig über den Umfang der Flansche verteilten Druck auf die Flansche zu deren Zentrierung ausüben.

Sodann können die Profilsegmente an der Innenseite eines durch den Spannverschluß spannbaren, biegsamen Spannbandes befestigt sein, das den Boden der Lücken bildet. Hierbei können die Profilsegmente aus steiferem Material als das biegsame Spannband ausgebildet werden und einem höheren Druck des durch die Rohre geleiteten Fluids standhalten, der bestrebt ist, die Rohre axial auseinanderzudrücken und die Seitenwände der Profilsegmente zu verbiegen.

Die Erfindung wird nachstehend anhand der beiliegenden Zeichnung eines bevorzugten Ausführungsbeispiels näher beschrieben. Darin stellen dar:
- Fig. 1: eine Seitenansicht eines Ausführungsbeispiels einer erfindungsgemäßen Profilschelle,
- Fig. 2: den Schnitt II-II der Profilschelle nach Fig. 1 im vergrößerten Maßstab vor dem Spannen der Profilschelle bei zunächst exzentrischer Anordnung zweier zu verbindender Rohre und
- Fig. 3: den Schnitt II-II der Profilschelle nach Fig. 1 in vergrößertem Maßstab im gespannten Zustand der um die zu verbindenden Rohre herumgelegten Profilschelle.

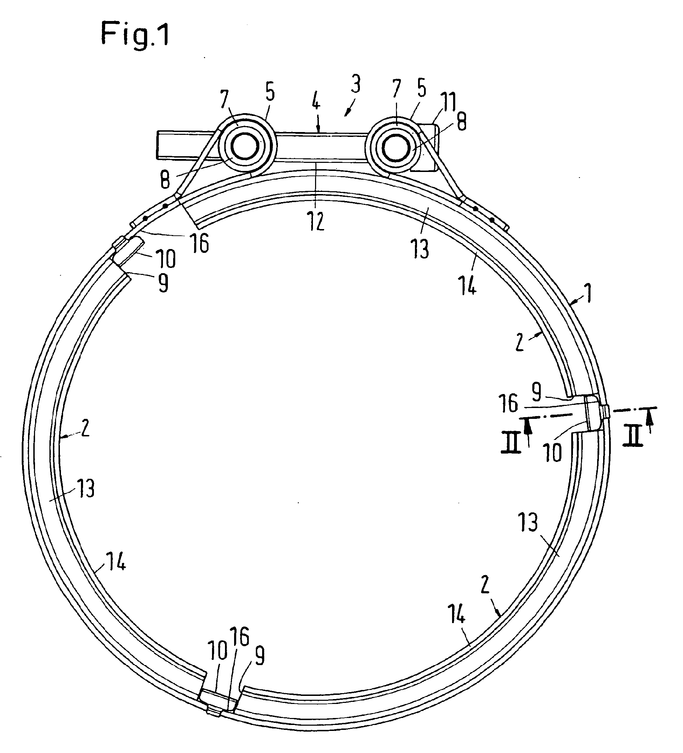

Die in den Fig. 1 bis 3 dargestellte Profilschelle besteht aus einem Spannband 1 aus elastisch biegsamem Metall, darin drei durch Punktschweißung befestigten Profilsegmenten 2 aus verhältnismäßig steifem Metall, einem Spannverschluß 3 mit einer Spannschraube 4, in Schlaufen 5 aus Endabschnitten des Spannbandes 1 drehbar eingeschlossenen, paarweise ineinandergesteckten Gelenkhülsen 7 und 8 und drei in Lücken 9 zwischen den Profilsegmenten 2 angeordneten Metallstreifen 10 aus Federstahlblech, wobei die Lücken 9 und die Metallstreifen 10 weitgehend gleiche Winkelabstände aufweisen.

Die Schlaufen 5 sind mit ihren Enden auf der Außenseite des Zwischenabschnitts des Spannbands 1 durch Punktschweißung angeschweißt und mit sich in ihrer Umfangsrichtung erstreckenden Schlitzen versehen, durch die die Spannschraube 4 hindurchgeführt ist. Die auf Seiten des Spannschraubenkopfes 11 liegenden Gelenkhülsen 7, 8 sind mit gewindefreien Löchern zur Durchführung des Gewindeschaftes der Spannschraube 4 und die in der anderen Schlaufe 5 angeordneten Gelenkhülsen 7, 8 mit Gewindelöchern versehen, durch die die Spannschraube 4 hindurchgeschraubt ist.

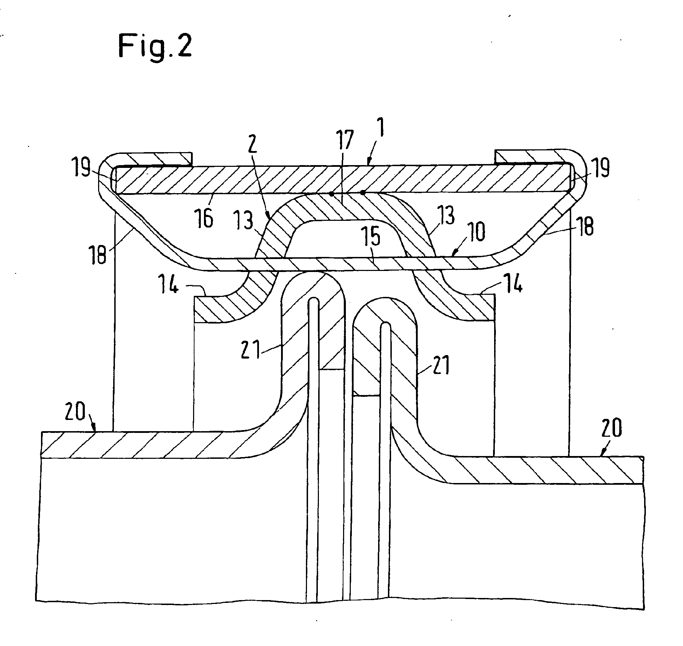

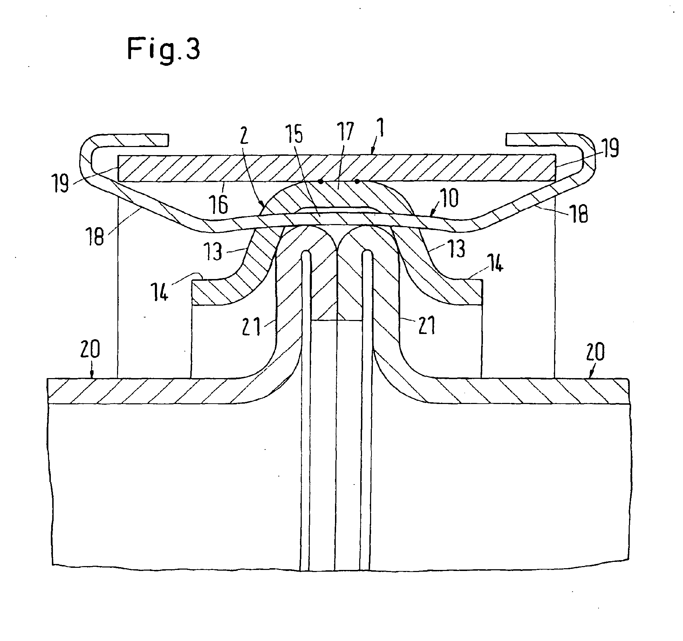

Die Profilsegmente 2 haben im Querschnitt nach den Fig. 2 und 3 ein Profil, das dem eines umgekehrten Troges oder dem eines Walmdaches ähnelt, wobei seine divergierenden Seitenwände 13 an ihren radial inneren Randabschnitten 14 axial voneinander weg umgebogen sind.

Jeder Metallstreifen 10 hat im ungespannten Zustand der Profilschelle nach Fig. 2 einen geradlinigen mittleren Abschnitt 15. Der Abschnitt 15 hat von einem durch das Schellenband 1 gebildeten Boden 16 der Lücke 9 einen Abstand, der größer als die Dicke, insbesondere als das Zweifache der Dicke, des Bodens 17 der Profilsegmente 2 und kleiner als die radiale Länge der Seitenwände 13 der Profilsegmente 2 ist. Die Dicke des Schellenbandes 1 ist etwa gleich der Materialdicke der Profilsegmente 2. Die Metallstreifen 10 erstrecken sich quer zur Schellenebene und sind über seitliche Arme 18 am Boden 16 der jeweiligen Lücke 9 angebracht. Die Arme 18 divergieren jeweils zu einem der Ränder 19 des Bodens 16 der betreffenden Lücke 9 hin und umgreifen den jeweiligen Rand 19 lose, sich an den Rändern 19 abstützend.

Die Profilschelle 1 dient zum koaxialen Verbinden zweier Rohre 20, die an ihren zu verbindenden Enden jeweils mit einem Flansch 21 versehen sind. Die Flansche 21 haben den gleichen Außendurchmesser und sind radial zunächst nach außen und dann nach innen umgebogen. Die Profilschelle wird vor dem Spannen um die Flansche 21 herumgelegt. Wenn die Rohre 20 vor dem Herumlegen der Profilschelle um die Flansche 21 radial etwas zueinander versetzt sind, wie es in Fig. 2 dargestellt ist, stößt der eine Flansch 21 mit seinem Umfang beim Spannen der Profilschelle zunächst an den einen Metallstreifen 10 und der andere Flansch 21 mit seinem Umfang an die beiden anderen Metallstreifen 10. Während die Profilschelle 2 weiter gespannt wird, verschieben sich die Flansche 21 radial relativ zueinander solange weiter, bis beide Flansche 21 an allen Metallstreifen 10 anliegen. Dabei kann sich der mittlere Abschnitt 15 der Metallstreifen 10 radial nach außen durchbiegen, wie es in Fig. 3 dargestellt ist, während sich seine Arme 18 weiter aufspreizen und an den Rändern 19 entlanggleiten können, da die Arme die Ränder nur lose umgreifen. Die Flansche 21 und gleichzeitig auch die mit den Flanschen 21 versehenen Endabschnitte der Rohre 20 werden dabei zentriert. Darüber hinaus werden die Flansche 21 durch die divergierenden Seitenwände 13 der Profilsegmente 2 dicht aneinandergedrückt. Falls erforderlich, kann zwischen den Flanschen 21 auch ein Dichtring angeordnet sein.

Abwandlungen der dargestellten Profilschelle können beispielsweise darin bestehen, daß mehr als drei Metallstreifen 10 und eine gleiche Anzahl von Lücken 9, z.B. vier oder fünf, über den inneren Umfang der Profilschelle verteilt vorgesehen sind, wobei deren Winkelabstände in Umfangsrichtung nicht identisch sein müssen. Es genügt, daß sie etwa gleich sind. Ferner sind die Metallstreifen 10 auch bei Profilschellen anwendbar, deren Profilsegmente mit dem Spannband einstückig ausgebildet sind, wie es beispielsweise aus der eingangs zitierten Patentschrift bekannt ist.

## Patentansprüche

1. Profilschelle mit durch wenigstens einen Spannverschluß (3) spannbaren, sich hintereinander in Umfangsrichtung der Schelle erstreckenden Profilsegmenten (2), die ein einem umgekehrten Trog im Querschnitt ähnelndes Profil aufweisen und zwischen deren divergierenden Seitenwänden (13) an den Enden zweier durch die Schelle zu verbindender Rohre (20) vorgesehene Flansche (21) mit gleichem Durchmesser beim Spannen der Schelle zueinander hin gedrückt werden, wobei zwischen einander benachbarten Profilsegmenten (2) jeweils einen Boden (16) aufweisende Lücken (9) vorgesehen sind, **dadurch gekennzeichnet, daß** sich in jeder Lücke (9) ein federnder Metallstreifen (10) in einem Abstand vom Boden (16) der Lücke (9), der größer als die Dicke des Bodens (17) der Profilsegmente (2) ist, quer zur Schellenebene erstreckt und über seitliche Arme (18) des Metallstreifens (10) am Boden (16) der Lücke (9) angebracht ist.

2. Profilschelle nach Anspruch 1, **dadurch gekennzeichnet, daß** die Arme (18) jeweils zu einem der Ränder (19) des Bodens (16) der betreffenden Lücke (9) hin divergieren und den jeweiligen Rand (19) lose umgreifen.

3. Profilschelle nach Anspruch 1 oder 2, **dadurch gekennzeichnet, daß** der Abstand im ungespannten Zustand der Schelle größer als das Zweifache der Dikke des Bodens (17) der Profilsegmente (2) und kleiner als die radiale Länge der Seitenwände (13) der Profilsegmente (2) ist.

4. Profilschelle nach einem der Ansprüche 1 bis 3, **dadurch gekennzeichnet, daß** die Lücken (9) in weitgehend gleichen Winkelabständen vorgesehen sind.

5. Profilschelle nach einem der Ansprüche 1 bis 4, **dadurch gekennzeichnet, daß** wenigstens drei Lücken vorgesehen sind.

6. Profilschelle nach einem der Ansprüche 1 bis 5, **dadurch gekennzeichnet, daß** die Profilsegmente (2) an der Innenseite eines durch den Spannverschluß (3) spannbaren, biegsamen Spannbandes (1) befestigt sind, das den Boden (16) der Lücken (9) bildet.

## Claims

1. Profile clamping collar having profile segments (2) tensible by at least one clamping closure (3) and extending one behind the other in the circumferential direction of the clamping collar which profile segments have a profile similar in cross-section to an inverted trough and between whose diverging side walls (13) flanges (21) of the same diameter provided at the ends of two pipes (20) joined by the clamping collar are pushed towards one another on tightening the clamping collar, wherein between profile segments (2) adjoining one another gaps (9) each having a base (16) are provided, **characterised in that** in each gap (9) a flexible metal strip (10) extends transverse to the clamping collar plane at a spacing from the base (16) of the gap (9) which is greater than the thickness of the base (17) of the profile segments (2) and is attached through lateral arms (18) of the metal strip (10) to the base (16) of the gap (9).

2. Profile clamping collar according to claim 1, **characterised in that** the arms (18) each diverge towards one of the edges (19) of the base (16) of the gap (9) in question and engage loosely around the edge (19) in question.

3. Profile clamping collar according to claim 1 or 2, **characterised in that** the spacing in the untensioned state of the clamping collar is greater than twice the thickness of the base (17) of the profile segments (2) and smaller than the radial length of the side walls (13) of the profile segments (2).

4. Profile clamping collar according to any of claims 1 to 3, **characterised in that** the gaps (9) are provided at largely identical angular spacings.

5. Profile clamping collar according to any of claims 1 to 4, **characterised in that** at least three gaps are provided.

6. Profile clamping collar according to any of claims 1 to 5, **characterised in that** the profile segments (2) are fastened on the inside of a flexible clamping strap (1) tensible by the clamping closure (3) forming the base (16) of the gaps (9).

## Revendications

1. Collier de serrage à profil avec des segments profilés (2) pouvant être tendus par au moins une fermeture à genouillère (3), s'étendant les uns derrière les autres dans le sens périphérique du collier de serrage, qui présentent un profil ressemblant à un bac à l'envers et entre les parois latérales (13) divergentes desquelles les brides (21) de même diamètre des extrémités de deux tubes (20) devant être reliés par le collier de serrage, sont pressées l'une vers l'autre lors du serrage du collier de serrage, entre des segments profilés (2) contigus étant prévues respectivement des brèches (9) présentant un fond (16), **caractérisé en ce qu'**une lame de métal (10) élastique s'étend dans chaque fente (9) à une distance du fond (16) de la fente (9) qui est plus grande que l'épaisseur du fond (17) des segments profilés (2), transversalement au plan du collier de serrage et est montée par le biais de bras (18) latéraux de la lame de métal (10) sur le fond (16) de la fente (9).

2. Collier de serrage profilé selon la revendication 1, **caractérisé en ce que** les bras (18) divergent respectivement vers l'un des bords (19) du fond (16) de la fente (9) concernée et entourent librement le bord (19) respectif.

3. Collier de serrage profilé selon la revendication 1 ou 2, **caractérisé en ce que** la distance à l'état détendu du collier de serrage est supérieure au double de l'épaisseur du fond (17) des segments profilés (2) et inférieure à la longueur radiale des parois latérales (13) des segments profilés (2).

4. Collier de serrage profilé selon l'une quelconque des revendications 1 à 3, **caractérisé en ce que** les brèches (9) sont prévues à des distances angulaires largement identiques.

5. Collier de serrage profilé selon l'une quelconque des revendications 1 à 4, **caractérisé en ce qu'**au moins trois brèches sont prévues.

6. Collier de serrage profilé selon l'une quelconque des revendications 1 à 5, **caractérisé en ce que** les segments profilés (2) sont fixés sur le côté intérieur d'une bande de serrage (1) flexible, pouvant être tendue par la fermeture à genouillère (3), qui forme le fond (16) des fentes (9).
